# DEMANDE DE BREVET EUROPEEN

(11) **EP 0 962 245 A1**
(43) Date de publication de la demande: **08.12.1999**
(21) Numéro de dépôt: 99420124.2
(22) Date de dépôt: 26.05.1999
(51) Int. Cl.: B01D 46/38, B01D 29/11, B01D 46/24

(54) **Procédé de filtration d'un fluide, installation mettant en oeuvre un tel procédé, et reacteur mettant en oeuvre une telle installation**

(30) Priorité: 02.06.1998 FR 9807121
(71) Demandeur: UNIVERSITE DE SAVOIE, F-73000 Chambéry (FR)
(72) Inventeur: Bernis, Alain, 73230 Saint Alban Leysse (FR); Gonthier, Yves, 38530 Chapareillan (FR)
(74) Mandataire: Vuillermoz, Bruno

(57) **Abrégé**

Ce procédé pour effectuer la filtration d'un fluide liquide ou gazeux consiste à opérer une filtration assistée par un lit fluidisé de grains au moyen d'un ou de plusieurs éléments de filtration immergés partiellement ou totalement au sein de ce lit fluidisé.

L'invention concerne également l'installation pour mettre en oeuvre ce procédé.

## Description

L'invention se rapporte à un nouveau procédé destiné à permettre la filtration d'un fluide liquide ou gazeux. Elle a également trait à une installation mettant en oeuvre ce procédé.

De nombreuses activités industrielles requièrent la mise en place d'étapes de filtration, soit en amont des processus mis en ***oeuvre*** , afin d'aboutir à un degré de pureté déterminé de l'un ou des fluides impliqués en vue de son utilisation ultérieure, soit en aval desdits processus, dans le cadre de la protection de l'environnement et de la limitation de la pollution.

De fait, de nombreuses techniques de filtration se sont développées pour tenter de faire face à ces impératifs.

Parmi celles-ci, il en existe une d'usage commode mettant en oeuvre des cartouches ou bougies de filtration. De telles cartouches, généralement de forme cylindrique, sont pourvues d'un tube central, à la surface externe duquel entre en contact le fluide à filtrer. Ce tube central recueille et évacue le filtrat résultant de cette étape de filtration. Il peut être constitué d'un matériaux plus ou moins poreux, par exemple réalisé en céramique, graphite, etc...

Si incontestablement, ce moyen de filtration remplit de manière satisfaisante la fonction de filtration proprement dite, à savoir l'élimination hors du filtrat de particules de dimensions déterminées, en revanche, il présente l'inconvénient de se colmater relativement rapidement à la périphérie du tube, sous la forme de gâteaux solides constitués par les particules à éliminer. Afin de s'affranchir de la réalisation de tels gâteaux, un moyen consiste à injecter un fluide en sens inverse dans le tube constitutif de la cartouche, de telle sorte à décolmater lesdites parois.

On a également proposé pour la réalisation de cette étape de filtration la mise en oeuvre de lits fluidisés ou semi-fluidisés. On a par exemple décrit dans le document FR-A-2 400 382, un procédé de filtration de particules fines, mettant en oeuvre un lit de matières granulaires retenues par un jeu de deux plaques perforées, respectivement supérieure et inférieure. Le fluide chargé à filtrer traverse de bas en haut le lit fluidisé ainsi constitué à une vitesse au moins égale au double de la vitesse minimum de fluidisation du lit non retenu. Il s'accumule alors un gâteau de particules dans la partie inférieure du lit. Lorsque l'on fait monter la plaque inférieure, la partie inférieure du lit est fluidisée tandis que la partie supérieure reste fixe. Le gâteau se fragmente alors et entre en turbulence dans la partie fluidisée, tandis qu'il se forme un nouveau gâteau contre la face inférieure du lit fixe. Lorsque le gâteau se trouve près de la plaque supérieure, on interrompt la filtration et on fait passer un fluide de purge en même temps qu'on soulève la plaque supérieure au dessus du lit entièrement fluidisé.

On conçoit aisément que si certes avec un tel procédé, il est possible d'aboutir à une filtration satisfaisante d'un fluide, en revanche, il n'est pas possible d'aboutir à une filtration continue puisqu'il est nécessaire d'injecter un fluide de purge afin de permettre le nettoyage et le décolmatage du lit fluidisé servant de média filtrant.

L'objet de l'invention est de proposer un procédé et un dispositif permettant de s'affranchir de ces différents inconvénients sans nécessiter la mise en oeuvre de moyens complexes.

Ce procédé pour effectuer la filtration d'un aérosol ou d'une suspension se caractérise en ce qu'il consiste à opérer une filtration assisté par un lit fluidisé.

En d'autres termes, l'invention consiste à immerger, à tout le moins partiellement, un élément de filtration au sein d'un lit fluidisé, le fluide de fluidisation étant constitué par le fluide à filtrer.

De la sorte, la surface filtrante de l'élément de filtration subit en permanence le frottement des grains constitutifs du lit fluidisé, ce frottement étant inhérent à la fluidisation du lit, qui empêche toute formation de gâteau à sa surface. Il n'y a plus d'encrassement au cours du temps de la dite surface filtrante, ni d'augmentation de la perte de charge.

Deux flux sont ainsi produits, l'un principal, exempt de particules, l'autre secondaire concentré en particules.

L'invention concerne également une installation pour effectuer la filtration d'un fluide liquide ou gazeux. Cette installation comprend au moins un élément filtrant et se caractérise en ce que le ou lesdits éléments filtrants sont au moins partiellement immergés dans un lit fluidisé.

Ces éléments filtrants peuvent être par exemple du type cartouche ou bougie.

La manière dont l'invention peut être réalisé et les avantages qui en découlent ressortiront mieux des exemples de réalisation qui suivent donnés à titre indicatif et non limitatif à l'appui des figures annexées.

La figure 1 est une représentation schématique du procédé et d'une installation de filtration conforme à l'invention.

Les figures 2 à 4 sont des représentations schématiques d'exemples de mise en oeuvre du procédé et de l'installation conformes à l'invention, respectivement en liaison avec :
- une salle à empoussièrement contrôlée ;
- un incinérateur ;
- une installation de traitement des eaux usées.

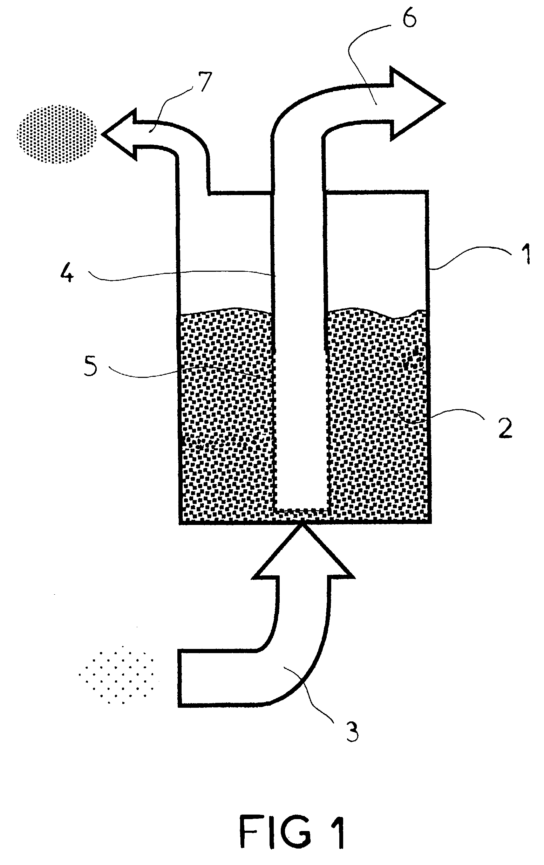

On a représenté très schématiquement au sein de la figure 1 le principe de fonctionnement du procédé et d'une installation conforme à l'invention.

Fondamentalement, cette installation comporte une enceinte de filtration (1) partiellement remplie d'un lit fluidisé (2) constitué, de manière connue, d'une couche de grains mis en suspension dans un écoulement fluide ascendant. Bien entendu, l'invention ne saurait se limiter à cette seule forme de réalisation, et la mise en oeuvre d'un lit fluidisé à fluide descendant peut également être mis en oeuvre.

De fait, la fluidisation de cette couche de grains est effectuée par un courant ascendant de fluide liquide ou gazeux. Ces grains eux-mêmes peuvent être constituées de sable, de billes ou microbilles de verre, etc... et ce de manière connue.

Selon l'invention, l'organe filtrant, constitué par un élément filtrant (4), est immergé au sein du lit fluidisé (2) et on a représenté par la référence (5) la paroi latérale poreuse de cet élément filtrant.

Ainsi qu'on peut l'observer, cet élément filtrant est sensiblement cylindrique et ses parois latérales sont orientées parallèlement à la direction de déplacement du fluide à filtrer dans l'exemple décrit. Il peut se présenter sous différentes formes , plan, cylindre et être réalisé en céramique, graphite, matière plastique, fibres tissées, etc., fonction de la nature du fluide à filtrer, de sa température, et de la dimension des particules à éliminer qu'il contient.

L'aérosol ou la suspension à filtrer est représenté par la flèche (3) et, les flèches (6) et (7) représentent respectivement la sortie du fluide filtré et la sortie du fluide concentré en particules que l'on souhaite extraire dudit fluide.

Compte tenu de la fluidisation du lit (2), les grains constitutifs du lit sont en mouvement permanent et viennent en contact ponctuel contre la paroi (5) de l'élément filtrant (4), de sorte qu'ils empêchent toute formation de gâteau à sa surface, susceptible de résulter de l'accumulation des particules à éliminer.

Bien entendu, la sortie (7) du fluide concentré en particules à éliminer peut être recyclée au niveau de l'entrée (3) et ce, de manière connue.

On conçoit de la sorte, que compte tenu du mode de fonctionnement de cette installation, on aboutit à une filtration continue, ne nécessitant aucune interruption, puisque l'élément de filtration proprement dit n'est jamais colmaté.

Diverses applications de ce procédé et de cette installation peuvent être mises en oeuvre.

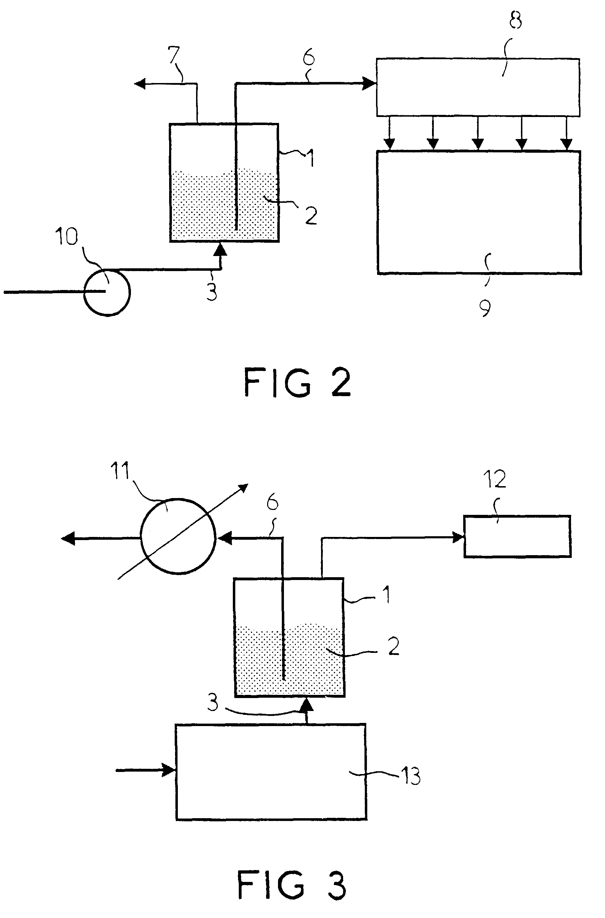

Tout d'abord, une première application, décrite ici en liaison avec la figure 2, peut consister en la filtration d'air pour les salles à empoussièrement contrôlé, telles que notamment les salles dites blanches. La production d'air ultra pur pour ce type de salles met traditionnellement en oeuvre trois types de filtres montés en série :
- un filtre très haute efficacité monté en finition, c'est à dire en aval du dispositif de filtration, dont le but est d'une part, de garantir la pureté de l'air qui rentre dans la pièce est d'autre part, d'assurer une hydrodynamique correcte du flux d'air. Ce filtre a dans la plupart des cas, une durée de vie suffisamment longue pour ne jamais être changé pendant la durée de vie de l'installation ;
- un filtre haute efficacité, monté en deuxième rang, donc juste en amont du filtre précédent, dont la durée de vie, compte tenu du colmatage progressif, est de deux à trois ans ;
- un filtre moyenne efficacité, installé en rang un, donc en amont du dispositif de filtration, assurant un rôle de dégrossissage, s'encrasse assez rapidement et requiert en général un remplacement annuel.

L'installation du type en question peut avantageusement remplacer les deux premiers étages de filtration, c'est à dire le filtre moyenne efficacité et le filtre haute efficacité. De la sorte, il est possible de travailler avec une perte de charge constante au cours du temps, et en outre et surtout, ce type de filtre peut être installé pour la durée de vie de l'installation, sans nécessiter un quelconque changement et sans nécessiter d'arrêt de l'installation.

Dans la figure 2, on a représenté par la référence (8), le filtre très haute efficacité, en amont duquel est montée l'installation conforme à l'invention, alimentée par une pompe (10) en air à filtrer. Ce filtre très haute efficacité communique alors avec la salle à empoussièrement contrôlée (9).

Une seconde application concerne le traitement des fumées d'incinérateurs ou de chaudières, et est décrite en liaison avec la figure 3. De manière connue, la combustion ou l'incinération de déchets engendre un débit très important de gaz chaud (environ 6000 Nm³ par tonne d'ordures ménagères incinérées), nécessitant un traitement afin de piéger la pollution chimique et particulaire tout en récupérant un maximum d'énergie.

Les procédés utilisés pour dépoussiérer les fumées, électrofiltres, filtres, cyclones, etc., sont dimensionnés en fonction du débit de gaz et non en fonction du débit de cendre à évacuer, d'où leur taille imposante. Par ailleurs, de par les matériaux constitutifs, ceux-ci, pour la plupart ne supportent pas les hautes températures, d'où l'obligation de refroidir les gaz incidents. Pour ce faire, deux techniques sont usuellement mises en oeuvre :
■ la pulvérisation d'eau, ayant pour conséquence une perte importante du potentiel énergétique du gaz;
■ les échangeurs thermiques qui travaillent en milieu empoussiéré, obligent à surdimensionner leur surface d'échange et à pratiquer de fréquents ramonages.

Or, ce refroidissement des gaz incidents avant dépoussiérage, outre le fait qu'il limite le rendement de l'échange thermique, favorise la formation de dioxines et autres furannes.

On propose de mettre en place une installation conforme à l'invention à l'issue de l'incinérateur (13), cette installation mettant en oeuvre une pluralité de cartouches immergées dans un lit fluidisé. De la sorte, on aboutit d'une part, à une réduction du débit de gaz empoussiéré à traiter, d'où l'utilisation d'une petite unité de filtration (12) et d'autre part, à une production de la plus grosse partie des fumées exempte de particules, permettant ainsi une récupération optimale de l'énergie par des échangeurs performants ou par des turbines à gaz (11). Enfin, compte tenu du fait que l'on s'affranchit de toute diminution de la température des gaz encore chargés en poussières, on limite sinon annule la formation des dioxines et furannes.

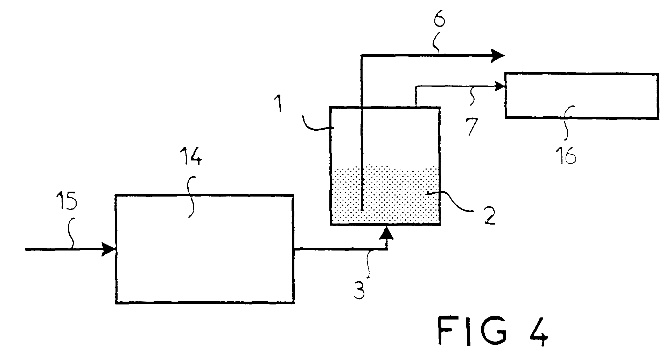

Une troisième application de l'installation conforme à l'invention concerne le traitement des eaux c'est à dire la limitation de la taille des décanteurs, voire la suppression de ceux-ci. Cette application est décrite ci-après en liaison avec la figure 4.

En effet, très souvent dans la filière traitement des eaux, la décantation constitue l'une des étapes du procédé utilisé, destinée de manière connue, à séparer le liquide des boues renfermant un certain nombres de déchets, organiques notamment, que l'on souhaite extraire du liquide à traiter, ces boues nécessitant quant à elles un traitement ultérieur. La force motrice de séparation des boues est directement liée au poids apparent du solide à décanter. La différence de masse volumique solide / fluide étant très souvent faible, les durées de décantation sont donc très longues, entraînant des tailles de décanteur parfois gigantesques (plusieurs mètres de diamètre) pour permettre le traitement d'un débit quotidien donné.

La mise en oeuvre de l'installation de l'invention, assure la filtration de la plus grosse partie des boues, réduisant de fait le débit (7) de liquide chargé, et permettant ainsi soit de minimiser la taille du décanteur (16), soit de le supprimer pour aller directement vers un filtre classique. L'installation est donc située immédiatement en aval d'un organe de traitement biologique ou physico-chimique (14), alimenté en eaux usées (15).

Les applications de l'invention ne sont pas bien entendu limitées aux exemples décrits ci-dessus.

On conçoit tous les avantages inhérents au procédé et à l'installation de l'invention. Ainsi, outre la facilité de mise en oeuvre, on peut notamment souligner la possibilité d'une filtration en continu de tous types de fluides, ce que les dispositifs connus à ce jour ne permettaient pas d'obtenir, compte tenu de leur colmatage périodique.

## Revendications

1. Procédé pour effectuer la filtration d'un fluide liquide ou gazeux ***caractérisé*** en ce qu'il consiste à opérer une filtration assistée par un lit fluidisé de grains au moyen d'un ou de plusieurs éléments de filtration immergés partiellement ou totalement au sein de ce lit.

2. Procédé pour effectuer la filtration d'un fluide liquide ou gazeux selon la revendication 1, ***caractérisé*** en ce que le fluide de fluidisation du lit est constitué par le fluide à filtrer.

3. Procédé pour effectuer la filtration d'un fluide liquide ou gazeux selon l'une des revendications 1 et 2, ***caractérisé*** en ce que la filtration mise en oeuvre est une filtration tangentielle, et en ce que la surface filtrante du ou des éléments assurant la filtration tangentielle est orientée parallèlement au sens de déplacement du fluide à filtrer.

4. Installation pour effectuer la filtration d'un fluide liquide ou gazeux comprenant au moins un élément filtrant (4), ***caractérisée*** en ce que le ou lesdits éléments filtrants (4) sont au moins partiellement immergés dans un lit fluidisé.

5. Installation pour effectuer la filtration d'un fluide liquide ou gazeux selon la revendication 4, ***caractérisée*** en ce que le ou les élémens filtrants (4) sont constitués de cartouches ou bougies de filtration.

6. Installation pour effectuer la filtration d'un fluide liquide ou gazeux selon la revendication 5, ***caractérisée*** en ce que la surface filtrante des bougies ou cartouches de filtration est orientée parallèlement à la direction de déplacement du fluide à filtrer.
